# EUROPÄISCHE PATENTSCHRIFT

(11) **EP 3 140 189 B1**
(45) Veröffentlichungstag und Bekanntmachung des Hinweises auf die Patenterteilung: **27.06.2018**
(21) Anmeldenummer: 15723122.6
(22) Anmeldetag: 06.05.2015
(51) Int. Cl.: B64C 27/02, B64C 27/12

(54) **HUBSCHRAUBER**
HELICOPTER
HÉLICOPTÈRE

(30) Priorität: 08.05.2014 DE 202014003903 U
(43) Veröffentlichungstag der Anmeldung: 15.03.2017
(73) Patentinhaber: Gräber, Andreas, 76199 Karlsruhe (DE)
(72) Erfinder: Gräber, Andreas, 76199 Karlsruhe (DE)
(74) Vertreter: Lichti - Patentanwälte Partnerschaft mbB
(86) Internationale Anmeldenummer: PCT/EP2015/000923
(87) Internationale Veröffentlichungsnummer: WO 2015/169442

(56) Entgegenhaltungen:
- US-A- 5 931 639
- US-A1- 2012 070 279
- US-A1- 2012 189 450

## Beschreibung

Die Erfindung betrifft einen Hubschrauber gemäß dem Oberbegriff des Anspruchs 1.

Ein gattungsgemäßer Hubschrauber ist in den Dokumenten US 2012/0070279, US 2012/0189450 oder US 5,931,639 offenbart.

Hubschrauber oder Helikopter erreichen nach dem momentanen Stand der Technik Höchstgeschwindigkeiten bis maximal ca. 360 km/h. Dabei fällt die Rotorantriebsachse, um welche sich die Rotorblätter drehen, stets zusammen mit der Rotorlagerachse, um welche die Rotorblattwellen befestigt sind. Letztere ist mechanisch durch die Rotorwelle gestaltet. Im Schwebeflug besitzen alle Punkte auf sämtlichen Rotorenblättern eines Rotors, die gleich weit von der Rotorantriebsachse entfernt sind, bei gleicher Winkelgeschwindigkeit (Dimension Z⁻¹) die gleiche Umlauf- oder Rotationsgeschwindigkeit (Dimension L x Z⁻¹), legen also zu gleichen Zeiten gleichlange Strecken zurück. Dabei haben Punkte nahe der Rotorantriebsachse eine kleinere Rotationsgeschwindigkeit als davon entferntere Punkte. Bewegt sich der Hubschrauber mit einer bestimmten Translationsgeschwindigkeit nach vorne, überlagert sich die Rotationsgeschwindigkeit der Rotorenblätter mit der Translationsgeschwindigkeit des Hubschraubers.

Im Folgenden wird ein Rotorsystem als "linksdrehend" bezeichnet, bei dem sich dessen Rotorblätter in Draufsicht auf den Hubschrauber gegen den Uhrzeigersinn drehen. Die folgenden Richtungsangaben beziehen sich stets auf eine Draufsicht auf den Hubschrauber von oben, mit dem Bug in der Zeichenebene nach oben ausgerichtet. Die Rotationsphase eines Rotorblattes gibt die momentane Lage in Relation zur Rotordrehachse an.

Im Falle eines linksdrehenden Rotorsystems wird die Translationsgeschwindigkeit des Hubschraubers selbst zu der Rotationsgeschwindigkeit des Rotorblattes auf der rechten Seite addiert, während die Translationsgeschwindigkeit aufgrund der entgegengesetzten Bewegung des Rotorblattes von der Rotationsgeschwindigkeit des Rotorblattes subtrahiert wird, um jeweils die Geschwindigkeiten des jeweiligen Rotorblatts über Grund zu erhalten. Durch die unterschiedliche Auswirkung der Translationsgeschwindigkeit des Hubschraubers auf die Geschwindigkeiten der Rotorblätter über Grund in Abhängigkeit ihrer Rotationsphase entsteht ein Geschwindigkeitsprofil der Rotorblätter entsprechend ihrer Lage. Im Falle eines linksdrehenden Rotorsystems befindet sich das Maximum dieses Profils auf der rechten, das Minimum auf der linken Seite. Deren Differenz ist umso größer, je größer die Translationsgeschwindigkeit des Hubschraubers ist. Bei den Rotoren auf der rechten Seite herrscht somit ein höherer Luftwiderstand, wogegen er auf der linken Seite geringer ist. Dies führt zu entsprechend unterschiedlichem Luftwiderstand auf der rechten und linken Seite. Beide Effekte lassen sich über eine Veränderung des Neigungswinkels der Rotorblätter gegenüber der Horizontalen so lange kompensieren, bis der Luftstrom wegen eines zu großen Luftwiderstandes bei (zu) hoher Geschwindigkeit abreißt. Dies ist der limitierende Faktor zum Erreichen höherer Translationsgeschwindigkeiten.

Es ist die Aufgabe der Erfindung, einen Hubschrauber zu entwickeln, mit dem die limitierenden Nachteile beseitigt sind und mit dem eine größere maximale Translationsgeschwindigkeit erzielt werden kann.

Die Erfindung löst die Aufgabe mit einem Hubschrauber gemäß Anspruch 1. Hierdurch kann eine Anpassung der Rotorblattlängen in Bezug zur Rotorantriebsachse in Abhängigkeit der Translationsgeschwindigkeit des Hubschraubers erreicht werden. Der Rotor hat zwei oder mehr Rotorblätter, insbesondere zwei bis sechs, vorzugsweise drei, vier oder fünf Rotorblätter.

Relativ zur Rotorantriebsachse wird auf einer Seite das Rotorblatt effektiv verlängert, was zu einer größeren Rotationsgeschwindigkeit und damit auch zu einer größeren Geschwindigkeit des Rotors über Grund führt. Dies geschieht idealerweise an jener Rotationsphase, in der die bisherige Geschwindigkeit des Rotors über Grund wegen der Translationsgeschwindigkeit des Hubschraubers reduziert war. Wesentlich ist aber, dass entsprechend auf der gegenüberliegenden Seite die Geschwindigkeit des Rotorblatts über Grund reduziert wird und das Geschwindigkeitsprofil somit ausgeglichener ausgestaltet wird.

Vorzugsweise können die Rotationsachse und die Rotorlagerachse getrennt voneinander ausgebildet sein. Durch die konstruktiv getrennte Ausgestaltung kann die Anpassung der Rotorlagerachse an den Flugzustand des Hubschraubers einfach und schnell durchgeführt werden.

Es kann von Vorteil sein, die Rotorlagerachse mit einer Komponente senkrecht zu der Längsachse des Hubschrauberkörpers verstellbar auszubilden, insbesondere verstellbar nach beiden Seiten der Längsachse des Hubschrauberkörpers, insbesondere senkrecht zu dieser. Damit ist eine Anpassung der Rotorlagerachse an unterschiedliche Ausgestaltungen von Hubschraubern möglich. Bei einem linksdrehenden Hubschrauber kann, wie bereits erwähnt, das Geschwindigkeitsprofil der Rotorblätter bei hohen Translationsgeschwindigkeiten ausgeglichen werden durch eine Verstellung der Rotorlagerachse in Flugrichtung gesehen nach links. Bei einem rechtsdrehenden Hubschrauber sind die Verhältnisse umgekehrt. Indem die Rotorlagerachse zu beiden Seiten verstellbar ausgestaltet ist, wird eine Kompensation unterschiedlicher Geschwindigkeitsprofile verschiedener Hubschraubertypen möglich.

Es ist erfindungsgemäß vorgesehen, dass die Rotorwelle in mehrere Teile unterteilt ist. Die Rotorwelle umfasst mindestens zwei senkrecht zur Rotorachse bewegliche Teile und mindestens einen gegenüber dem Rotorkopf starren Teil (Rotorlagerwelle, Zusatz-Rotorlagerwelle als bewegliche Teile ausgestaltet und Rotorführungswelle als starrer Teil). Der Rotorkopf hält in mindestens einem Rotor-blattsegment die mindestens zwei Rotorblätter. Mindestens ein Zusatz-Rotorblattsegment ist vorgesehen, dessen Aufbau dem Rotorblattsegment ähneln kann. Das Zusatz-Rotorblattsegment oder die Zusatz-Rotorblattsegmente sind an das Rotorblattsegment gekoppelt Hierdurch wird ermöglicht, dass durch die Verstellung der Rotorblattwellen des jeweiligen Rotorblattsegmentes eine entsprechend gewünschte Verstellung der Zusatz-Rotorblattwellen des Zusatz-Rotorblattsegmentes erzielt wird. Dadurch wird durch eine Bewegung der die Rotorblätter eines Rotors führenden Rotorwelle unabhängig von den restlichen Komponenten eine Anpassung der Rotorblattstellung an die Translationsgeschwindigkeit des Hubschraubers erzielt. Dies betrifft ebenfalls die Ermöglichung gegenläufiger Auslenkungen der beweglichen Teile der Rotorwelle. Hierzu sind die beweglichen Teile der Rotorwelle, Rotorlagerwelle und Zusatz-Rotorlagerwelle gegenläufig auslenkbar und dadurch sind die Rotorblattwellen und die Zusatz-Rotorblattwellen gegenläufig zueinander beweglich.

Für eine vereinfachte konstruktive Ausgestaltung folgen die mehreren Teile der Rotorwelle in ihrer axialen Richtung aufeinander.

Gemäß einer bevorzugten Ausgestaltung ist ein Sinussteller vorhanden, durch den eine Rotorwelle, deren Symmetrieachse die Rotorlagerachse ist, senkrecht zu dieser verstellbar ist. Der Sinussteller ist mit den Rotorblattwellen mittelbar oder unmittelbar verbunden und verstellt diese über die Rotorwelle senkrecht zur Erstreckungsrichtung der Rotorlagerachse. Die Verstellung der Rotorwelle kann dabei in einer oder in zwei Dimensionen erfolgen. Die Amplitude ist frei wählbar und kann sich insbesondere nach der Translationsgeschwindigkeit des Hubschraubers richten. Im oben genannten Beispiel eines linksdrehenden Rotors sorgt der Sinusteller dafür, dass sich der Abstand des auf der rechten Seite des Hubschraubers befindlichen Rotorblattes in Relation zur Rotordrehachse verkürzt und sich jener des links befindlichen Rotorblattes zur Rotordrehachse vergrößert. Diese Ausrichtung ist für jede Rotorposition herzustellen und wird daher für die gesamte Flugdauer ständig geregelt. Vorzugsweise sind mindestens zwei Rotorblattwellen mit der Rotorwelle verbunden und mit dieser verstellbar.

Es kann weiterhin vorgesehen sein, die Rotorblattwellen fest, aber nicht drehfest, in Schwinglagern zu führen und sie durch die Verstellung des Sinusstellers radial zur Rotorantriebsachse zu bewegen. Dabei ändert sich der Abstand der Rotorblätter von der Rotorantriebsachse in Abhängigkeit der Einstellung durch den Sinussteller.

Weiterhin kann vorgesehen sein, dass der Antrieb der Rotorblätter über den Rotorkopf erfolgt. Die Rotorantriebsachse kann mit der vertikalen Symmetrieachse des Rotorkopfes zusammenfallen. Die Antriebskraft wird dabei von Schwinglagern über Rotorringe *auf die* Rotorblattwellen übertragen. Dies beinhaltet eine bevorzugte konstruktive Realisierung der Trennung von Rotorantriebsachse und Rotorlagerachse. Bei einer Verstellung der Rotorlagerachse durch den Sinussteller senkrecht zur Rotorlagerachse bleibt die Rotorantriebsachse unverändert. So können die radialen Abstände der Rotorblätter von der Rotorantriebsachse auf die Translationsgeschwindigkeit des Hubschraubers abgestimmt werden. Erhöht sich die Translationsgeschwindigkeit des Hubschraubers, so kann durch eine größere Auslenkung des Sinusstellers eine größere Verschiebung der Rotorblattwellen hervorgerufen werden, was, wie oben erwähnt, einen Ausgleich des erwähnten Geschwindigkeitsprofils in Abhängigkeit der Rotorphase des Helikopters zur Folge hat. Dabei können die Rotorringe mit den Schwinglagern verbunden sein.

Es kann weiterhin vorgesehen, dass Rotorringe unterschiedlicher Rotorblattsegmente miteinander gekoppelt sind. Dadurch kann eine einheitliche Drehgeschwindigkeit der einzelnen Segmente sichergestellt werden.

*In bevorzugten Ausgestaltungen ist vorgesehen, dass mindestens zwei Teile der Rotorwelle senkrecht zur Rotorlagerachse beweglich sind, dass mindestens ein Teil der Rotorwelle starr gegenüber dem Rotorkopf ist und*/*oder dass mindestens ein Teil der Rotorwelle mit dem Rotorkopf oder dessen Komponenten verbunden ist.*

Der starre Teil der Rotorwelle kann fest, z.B. mit dem Rotorkopf verbunden sein. Dies dient zur schlüssigen Übertragung der an der Rotorwelle entstehenden Kräfte auf dem Rotorkopf sowie der Erhöhung der Stabilität des Aufbaus insgesamt, sowohl statisch als auch dynamisch.

In einer besonders vorteilhaften Ausgestaltung kann vorgesehen sein, *dass* mindestens *eine* Rotorblattwelle an einem Teil der Rotorwelle *befestigt ist, wobei bei mindestens zwei Rottorblattwellen diese unabhängig voneinander an mindestens einem Teil der Rotorwelle befestigt sind* und dadurch einzelne Rotorblattwellen unabhängig voneinander zu bewegen.

Es kann darüber hinaus vorgesehen sein, dass eine oder mehrere Rotorblattwellen mit einer Taumelscheibe verbunden ist bzw. sind, *insbesondere unabhängig voneinander.* Dies ermöglicht ein individuelles Einstellen des Neigungswinkels der mit der Taumelscheibe individuell verbundenen Rotorblattwellen und dadurch eine Anpassung des Luftwiderstandes des Rotorblattes an die Erfordernisse des momentanen Flugverhaltens.

In einer vorzugsweisen Ausgestaltung kann das Zusatz-Rotorblattsegment oberhalb und/oder unterhalb des Rotorblattsegmentes angeordnet sein. In einer weiteren bevorzugten Ausgestaltung kann das Zusatz-Rotorblattsegment statt Rotorblättern Zusatzgewichte an den Rotorblattwellen aufweisen. Die Masse dieser Zusatzgewichte kann zeitlich fest oder variabel sein. Sie können festes, flüssiges oder gasförmiges Material enthalten.

*In bevorzugten Ausgestaltungen ist vorgesehen, dass mindestens zwei der Rotorringe von mindestens zwei unterschiedlichen Rotorblattsegmenten miteinander gekoppelt sind.*

Die Kopplung des Zusatz-Rotorblattsegments an das Rotorblattsegment kann beispielsweise durch ein Scherensegment *realisiert sein, das vorzugweise* Gleitstücke und Gleitschienen *aufweist.* Die Art und Weise der Kopplung wird durch den Aufbau des Scherensegmentes erzielt. Die Art der Kopplung und das Design der Zusatzgewichte wird dabei auf das Flugverhalten des Helikopters abgestimmt, um die bestmögliche Stabilität durch eine Kompensation entstehender Unwuchten zu gewährleisten.

In einer bevorzugten Ausführung *kann mindestens eine der* Zusatz-Rotorblattwelle des Zusatz-Rotorblattsegmentes baugleich zu den Rotorblattwellen des Rotorblattsegments sein *oder die gleiche Bauform wie diese aufweisen.* Diese Ausführungsform erlaubt eine effiziente Herstellung und Umsetzung, da die Zusatz-Rotorblattwellen des Zusatz-Rotorblattsegmentes insbesondere die gleichen Längen wie die Rotorblattwellen des Rotorblattsegmentes aufweisen. Die Gewichte werden entsprechend angepasst, um die Kompensation vorhandener Unwuchten und eine größtmögliche Stabilität des Helikopters im Flug zu gewährleisten.

Eine weitere bevorzugte Ausführung kann vorsehen, dass in dem Zusatz-Rotorblattsegment oder in den vorhandenen Zusatz-Rotorblattsegmenten die Längen der Rotorblattwellen unterschiedlich zu den Rotorblattwellen des Rotorblattsegments sind. Die Parameter der Gewichte werden auch hier angepasst, so dass die größtmögliche Stabilität des Hubschraubers im Flug erzielt wird. Diese Ausführungsform des Zusatz-Rotorblattsegmentes führt zu einer verbesserten Flugleistung infolge einer hinsichtlich dynamisch und aerodynamisch optimierten Ausgestaltung des Zusatz-Rotorblattsegmentes und einer damit veränderten Bauform des Rotorkopfes.

Eine weitere bevorzugte Ausführung kann eine erfindungsgemäße Weiterentwicklung des aus dem Stand der Technik bereits bekannten Aufbaus eines Koaxialrotors vorsehen. Dabei *kann* das Zusatz-Rotorblattsegment mit Zusatz-Rotorblättern versehen *sein.* Es handelt sich also beispielsweise um zwei axial übereinanderliegende Rotorblattsegmente mit gegenläufigen Drehrichtungen. Dadurch gleichen sich die Drehmomente beider Rotorblattsegmente aus. Der dazu erforderliche Kopplungsmechanismus zwischen beiden Rotorblattsegmenten kann durch Kegelräder in einem koaxialen Scherensegment erfolgen. Dieser Aufbau erfordert eine Zusatz-Taumelscheibe zur Einstellung des Neigungswinkels der Zusatz-Rotorblattwellen des Zusatz-Rotorblattsegmentes, welche mit Rotorblättern statt Gewichten ausgestattet sind. Eine erfindungsgemäße Ausführung der Weiterentwicklung dieses Aufbaus sieht vor, die Rotorantriebsachse von der Rotorlagerachse des Koaxialrotors zu entkoppeln. Die Verstellung der Rotorlagerachse erfolgt durch einen weiteren Sinussteller, der bevorzugt im koaxialen Schersegment angebracht ist.

Vorzugsweise ist die Drehrichtung des Rotorblattsegmentes mit jener von mindestens einem Zusatz-Rotorblattsegment gekoppelt, insbesondere über Kegelräder in einen Nutenring, welcher in einem koaxialen Scherensegment angebracht ist. Damit sind gleich- oder gegenläufige Drehbewegungen möglich.

Insbesondere erfolgt in einer besonders bevorzugten Ausführung die Verstellung des Zusatz-Rotors über eine Gewindespindel und Gleitstücke, welche gleichmäßig gegeneinander verstellbar sind. Dies kann sowohl elektrisch als auch hydraulisch über Verbindungen, die in der Hauptachse geführt sind, bewerkstelligt werden.

Vorzugsweise ist mindestens eine Zusatz-Taumelscheibe vorhanden, die mindestens ein Zusatz-Rotorblattsegment ansteuert. Ferner kann mindestens eine der Taumelscheiben im Rotorkopf, besonderes bevorzugt im Rotordeckel eingebaut sein. Hierdurch ergeben sich Vorteile aufgrund der kurzen mechanischen Kopplung zu den Rotorblattwellen über Gestänge und Hebel. Mindestens eine der Taumelscheiben kann mit mindestens einer der Zusatz-Taumelscheiben, z.B. über Gestänge und Hebel, *gekoppelt* sein, um eine synchrone Veränderung des Neigungswinkels der Rotorblattwellen und der Zusatz-Rotorblattwellen zu ermöglichen.

Vorzugsweise können am Hubschrauberkörper Tragflächen und/oder Seitenleitwerke angeordnet sein. Ein Teil der Tragflächen kann als Höhenleitwerk ausgestattet sein, wobei höchst vorzugsweise das Höhenleitwerk in Flugrichtung gesehen vor den Tragflächen am Hubschrauberkörper angebracht ist. Hierdurch ist auch bei steigender Translationsgeschwindigkeit des Hubschraubers eine stabile Fluglage und Manövrierbarkeit gewährleistet. Zudem werden die Antriebseigenschaften verbessert.

Höchst vorzugsweise können die Tragflächen drehbar am Hubschrauber vorgesehen sein, wobei sie insbesondere um einen Winkel von mindestens 90° drehbar sind. Damit ist ein rein aerodynamischer Ausgleich des Drehmoments des Hauptrotors möglich. Weitere Vorteile sind eine Geräuschreduktion des Rotors sowie die Möglichkeit einer Vorwärts- und/oder Drehbewegung um die eigene Achse im Schwebeflug.

Im Hubschrauberkörper kann ein Generator als Primärantrieb vorgesehen sein, der vorzugsweise Turbinen, Kolbenmotoren, Brennstoffzellen und/oder Akkumulatoren aufweist. Damit können noch höhere Translationsgeschwindigkeiten erreicht und auch eine Schubumkehr ermöglicht werden, so dass der Hubschrauber schnell abgebremst werden kann.

Vorzugsweise ist ein Lagerring in einem Verstellschlitten im Hubschrauberkörper beweglich gelagert, wobei der Lagerring mit dem Rotorkopf verbunden und der Lagerring mit dem Rotorkopf in Richtung der Längsachse des Hubschrauberkörpers verschiebbar ist. Bei steigender Translationsgeschwindigkeit verlagert sich der Schwerpunkt des Auftriebs immer weiter gegen die Flugrichtung nach hinten, somit verlagert sich der Lastschwerpunkt des Hubschraubers nach vorne. Durch die Verschiebung des Rotorkopfes nach vorne in Richtung des Bugs des Hubschraubers kann der Schwerpunkt des Auftriebs wieder in die Nähe des Schwerpunktes des Hubschraubers bewegt werden. Der Rumpf des Hubschraubers bleibt somit strömungsgünstig und mit kleinstmöglicher Stirnfläche in der Luftströmung. Damit wird eine höhere maximale Translationsgeschwindigkeit erreicht sowie eine günstige Fluglage und eine schnellere seitliche Bewegung.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im Einzelnen erläutert sind. Dabei zeigt:
- Fig. 1: eine bevorzugte Ausführung des erfindungsgemäßen Hubschraubers in unausgelenktem Zustand im Vertikalschnitt mit Blickrichtung von hinten bzw. in Flugrichtung des Hubschraubers;
- Fig. 2: eine schematische Schnittdarstellung der Ausführungsform der Fig. 1 mit ausgelenktem Rotorkopf mit entsprechend ausgelenkten Sinussteller und Rotorblattwellen;
- Fig. 3a-3c: Draufsichten auf einen Rotor eines erfindungsgemäßen Hubschraubers in unausgelenktem Zustand des Rotorkopfes (Fig. 3a) und in ausgelenkter Position des Rotorkopfes (Fig. 3b, 3c) mit unterschiedlichen Rotorblattstellungen;
- Fig. 4: einen Schnitt durch das mittlere Scherensegment zwischen dem Rotorblattsegment und dem ZusatzRotorblattsegment in unausgelenkter Position;
- Fig. 5: eine Draufsicht des unausgelenkten Scherensegmentes in bevorzugter Ausführung;
- Fig. 6: eine weitere bevorzugte, erfindungsgemäße Ausführung im Längsschnitt durch den unausgelenkten Rotorkopf, wobei die Zusatz-Rotorblattwellen des Zusatz-Rotorblattsegments gegenüber den Rotorblattwellen des Rotorblattsegments verkürzt sind und mit Zusatzgewichten versehen sind;
- Fig. 7: eine weitere bevorzugte, erfindungsgemäße Ausführung im Längsschnitt durch den Rotorkopf, wobei das Zusatz-Rotorblattsegment als ein Koaxialrotor ausgestaltet ist;
- Fig. 8: eine Draufsicht des koaxialen Schersegmentes in der bevorzugten Ausführung mit einem Koaxialrotor;
- Fig. 9: eine weitere Ausgestaltung eines erfindungsgemäßen Hubschraubers mit Tragflächen und einem Primärantrieb in einer Seitenansicht;
- Fig. 10: eine Draufsicht auf den Hubschrauber von Fig. 9;
- Fig. 11: eine schematische Draufsicht auf eine weitere Ausgestaltung eines erfindungsgemäßen Hubschraubers mit einem Verstellschlitten und einem Lagerring; und
- Fig. 12: den Hubschrauber aus Fig. 11 mit einem verstellten Lagerring.

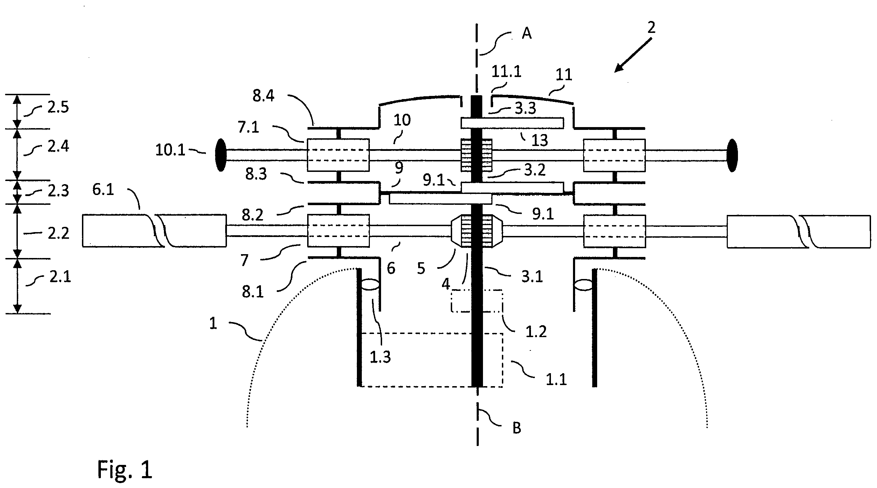

Die Fig. 1 zeigt eine bevorzugte Ausführungsform des erfindungsgemäßen Hubschraubers. Dieser weist einen Hubschrauberkörper 1 mit einer Längsachse L, die senkrecht zur Zeichenebene verläuft und deshalb nicht dargestellt ist, und einen Rotorkopf 2 auf. Der Rotorkopf 2 ist als Rotorglocke ausgebildet und weist eine Rotorwelle 3 auf, die selbst erfindungsgemäß nicht angetrieben ist und hier aus drei Teilen bestehend dargestellt ist, die axial aufeinander folgen: Rotorlagerwelle 3.1, Zusatz-Rotorlagerwelle 3.2 und Rotorführungswelle 3.3. Mit der Rotorlagerwelle 3.1 sind über ein Rotorblattwellenlager 4 sich senkrecht zur Rotorlagerwelle 3.1 erstreckende Rotorblattwellen 6 verbunden und auch in einer Radialebene zur Rotorlagerwelle 3.1 schwenkbar. Am äußeren Ende jeder Rotorblattwelle 6 befindet sich ein eigentliches Rotorblatt 6.1.

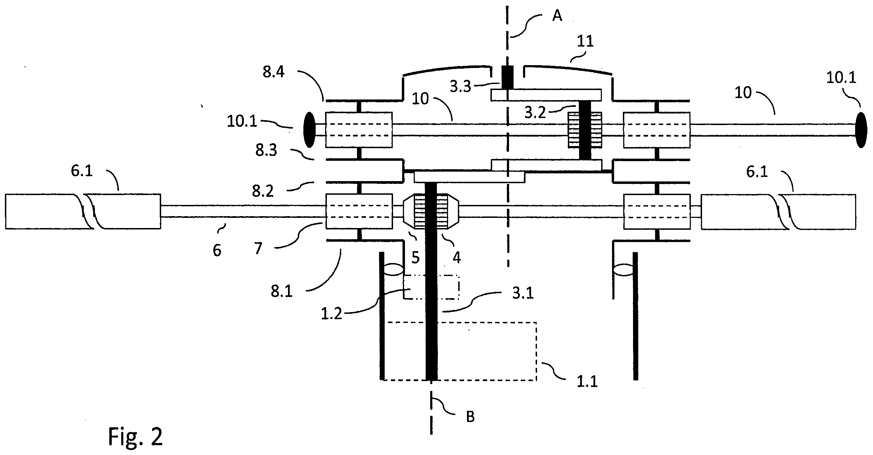

Die - nicht angetriebene - Rotorlagerwelle 3.1 ist selbst in einem im Hubschrauberkörper 1 angeordneten Sinussteller 1.1 gelagert und durch diesen senkrecht zu ihrer Erstreckungsrichtung und senkrecht zur Flugrichtung des Hubschraubers verschiebbar (Fig. 2).

Der als Rotorglocke ausgebildete Rotorkopf 2 ist über eine oben aus dem Hubschrauberkörper 1 herausragende zylindermantelförmige Antriebswelle 1.3 antreibbar. Der genaue Antrieb ist nicht dargestellt und kann über ein übliches Getriebe von einem Antriebsmotor her erfolgen. Die Antriebswelle 1.3 umgibt die Rotorlagerwelle 3.1 mit großem radialen Abstand, so dass genug seitlicher Freiraum zum seitlichen Verschieben der Rotorlagerwelle 3.1 relativ zur Rotorantriebsache A der Antriebswelle 1.3 gegeben ist.

Die Antriebswelle 1.3 treibt den als Rotorglocke ausgebildeten angetriebenen Rotorkopf 2 an. Sie ist hierzu über untere Rotorringe 8.1 zunächst mit Schwinglagern 7 für die Rotorblattwellen 6 verbunden. Hierdurch werden die Rotorblattwellen 6 und damit die Rotorblätter 6.1 dreh-angetrieben, sind aber in den Schwinglagern 7 radial zur Rotorlagerwelle 3.1 und entlang ihrer eigenen Erstreckung verschiebbar.

Gemäß der vorstehenden Beschreibung lässt sich demgemäß der Aufbau des Rotorkopfes 2 in einen Antriebsteil 1.3, 7, 8.1 und einem Lagerteil 3.1, 4, 6 unterteilen.

Die weiteren Teile des Rotorkopfes betreffen einen Unwuchtausgleich und werden weiter unten beschrieben.

Durch die seitlich verschiebbare Ausgestaltung der Rotorlagerwelle 3.1 mit Trennung von Rotorlagerwelle 3.1 und damit auch der Rotorwelle 3 an sich und Antriebswelle 1.3 der Rotorblätter 6.1 können letztere aus der in Fig. 1 dargestellten Normalstellung oder Startposition in die in Fig. 2 dargestellte Flugposition, insbesondere für hohe Translationsgeschwindigkeiten des Hubschraubers, verschoben werden. Die Fig. 2 zeigt dabei im Schnitt die Position der verstellten Rotorblätter für einen linksdrehenden Rotor aus der Sicht von hinten.

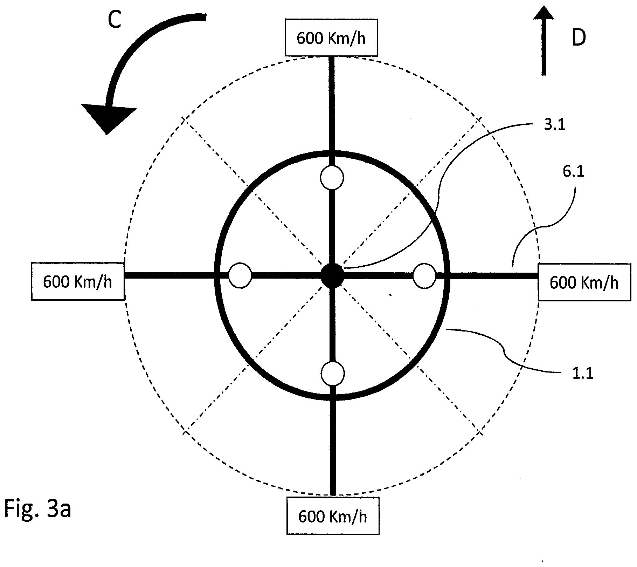

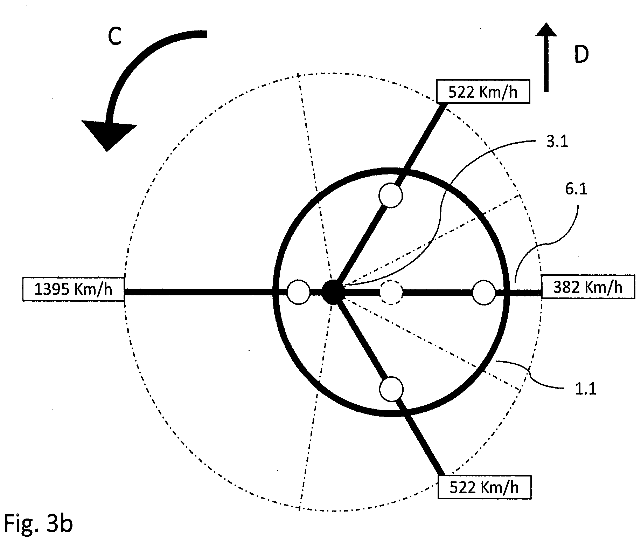

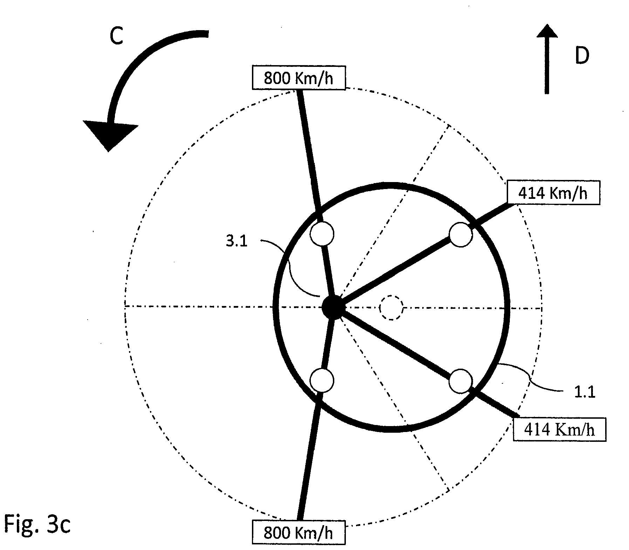

Die hierdurch gegebenen Verhältnisse sind in den Fig. 3a bis 3c mit Draufsicht von oben dargestellt. Dabei sind die Drehrichtung C der Rotorblätter und die Flugrichtung D des Hubschraubers angegeben. Fig. 3a zeigt die Neutral- oder Startposition von Rotorlagerwelle 3.1 und Antriebswelle 1.3. Bei einer durch die Antriebswelle 1.3 auf die Rotorblätter 6.1 übertragenen gegebene Winkelgeschwindigkeit ergibt sich an den äußeren Enden der Rotorblätter 6.1 jeweils die gleiche Rotationsgeschwindigkeit, wie hier beispielsweise 600km/h. Mit hoher Flug- oder Translationsgeschwindigkeit des Hubschraubers wird bei einem linksdrehenden Rotor die Rotorlagerwelle 3.1 in der Darstellung der Fig. 3b und 3c bzw. bei Betrachtung in Flugrichtung D (Fig. 2) relativ zur Antriebswelle 1.3 nach links bewegt. Dies bewirkt, dass bei einer Drehposition des Rotors, bei der zwei Rotorblätter 6.1 sich zueinander fluchtend senkrecht zur Flugrichtung F erstrecken, das sich in Flugrichtung F gesehene, linke Rotorblatt (bei der Sicht der Fig. 2, 3b) bei gleicher Winkelgeschwindigkeit wie bei Fig. 3a an seinem äußeren Ende aufgrund des größeren Abstandes von der Rotorantriebsachse A eine wesentliche größere Rotationsgeschwindigkeit (relativ zum Hubschrauberkörper 1) hat, hier 1395km/h, während das rechte Rotorblatt eine merklich geringere Rotationsgeschwindigkeit, hier 382km/h, hat. Ohne Berücksichtigung weiterer Einflüsse findet am linken Rotorblatt bereits ein Strömungsabriss statt, da sich die Spitze des Rotorblattes mit Überschallgeschwindigkeit bewegt.

Bei einer Translationsgeschwindigkeit des Hubschraubers von 300km/h haben damit trotz höherer Geschwindigkeit des Hubschraubers die beiden äußeren Enden der Rotorblätter Rotationsgeschwindigkeiten, bei denen noch kein Strömungsabriss erfolgt. Die sich ergebenden Geschwindigkeiten über Grund für das linke und rechte Rotorblatt lauten für das vorliegende Beispiel 1095 km/h und 682 km/h. Theoretisch bewegen sich dabei das linke und rechte Rotorblatt gleich schnell über Grund, wenn der Hubschrauber sich mit einer Translationsgeschwindigkeit von 888 km/h in Flugrichtung D bewegt.

Da die Rotorlagerachse B der Rotorlagerwelle 3.1 und die Rotorantriebsachse A der Antriebswelle 1.3 auseinanderfallen, ändert sich bei gleicher Winkelgeschwindigkeit der Rotorantriebsachse A die Winkelgeschwindigkeit der Rotorblätter 6.1 um die Rotordrehachse A sinusförmig - das in der Blickrichtung der Fig. 3b linke Rotorblatt überstreicht in der gleichen Zeit einen größeren Winkel als das rechte. Daher dürfen die Rotorblätter 6.1 (mit ihren Rotorblattwellen 6) nicht drehfest mit der Rotorlagerwelle 3.1 verbunden sein und sind es auch nicht. Ihre Relativwinkelposition ändert sich bei der Umdrehung, wie insbesondere der Vergleich der Fig. 3b und 3c zeigt. In gleicher Zeit überstrichene Winkelbereiche der einzelnen Rotorblätter sind in den Fig. 3b, 3c strichpunktiert angedeutet.

Gemäß Fig. 1 weist der Rotorkopf 2 im Wesentlichen fünf Segmente auf (von unten nach oben in der Fig. 1): Lagersegment 2.1, Rotorblattsegment 2.2, mittleres Scherensegment 2.3, Zusatz-Rotorblattsegment 2.4 und ein Rotordeckelsegment 2.5. Im Rotorblattsegment 2.2 ist die Antriebswelle 1.3 mit den unteren Rotorringen 8.1 verbunden, welche wiederum drehbar mit Schwinglagern 7 verbunden sind. Die Schwinglager 7 ihrerseits nehmen die Rotorblattwellen 6 auf. Die oberen Rotorringe 8.2 sind oberhalb der Schwinglager 7 mit ihnen verbunden. Diese oberen Rotorringe 8.2 des Rotorblattsegmentes 2.2 sind ihrerseits über die Zwischenplatte 9 des mittleren Scherensegmentes 2.3 mit den unteren Zusatz-Rotorringen 8.3 des Zusatz-Rotorblattsegmentes 2.4 verbunden. Analog zum Rotorblattsegment 2.2 sind die unteren Zusatz-Rotorringe 8.3 über Zusatz-Schwinglager 7.1 des Zusatz-Rotorblattsegmentes 2.4 mit den oberen Zusatz-Rotorringen 8.4 verbunden, welche mit einem Rotordeckel 11 das Rotordeckelsegment 2.5 bilden.

Im Lagerungsteil des Rotorkopfes 2 weist der Sinussteller 1.1 eine motorische Verstelleinrichtung (Gewindespindel, Lagerschlitten mit Gleitschiene) zur Lagerung und Verschiebung der Rotorwelle 3 auf. Die Amplitude ihrer Verschiebung durch den Sinussteller 1.1 kann sich insbesondere nach der Translationsgeschwindigkeit des Hubschraubers richten und dient dazu, die Rotorblattwellen 6 entsprechend zu bewegen. Die Rotorwelle 3 ist hier, wie bereits gesagt, in drei Teile unterteilt: Rotorlagerwelle 3.1, Zusatz-Rotorlagerwelle 3.2 und Rotorführungswelle 3.3. Die Rotorwellenblattlager 4 sind mit der Rotorlagerwelle 3.1 und den Rotorblattwellen 6 verbunden. Eine Taumelscheibe 1.2 ist sowohl am Sinussteller 1.1, als auch über Gestänge und Hebel an Drehlagerböcken 5 befestigt, welche wiederum mit den Rotorblattwellen 6 verbunden sind. Die Rotorblattwellen 6 sind ihrerseits mit Axiallagern in den Schwinglagern 7 aufgenommen und geführt.

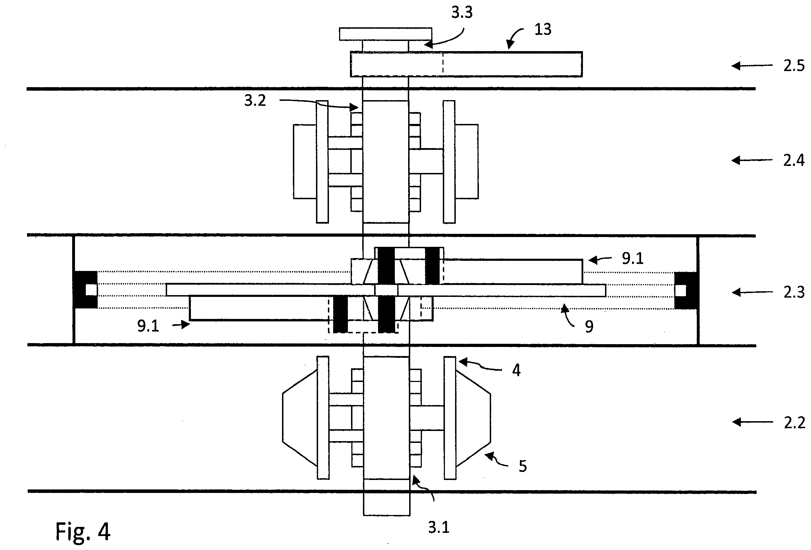

Die Rotorlagerwelle 3.1 ist im mittleren Scherensegment 2.3 über Gleitstücke 9.1 mit der Zwischenplatte 9 verbunden, wie auch aus den Fig. 1 und 4 hervorgeht. Die Gleitstücke 9.1 verbinden die Zwischenplatte 9 mit der Zusatz-Rotorlagerwelle 3.2 im Zusatz-Rotorblattsegment 2.4. Dessen Aufbau ist ähnlich zum Rotorblattsegment 2.2, mit Ausnahme der Drehlagerböcke 5. An den Zusatz-Rotorblattwellen 10 des Zusatz-Rotorblattsegmentes 2.4 sind Gegengewichte 10.1 zum Umwuchtausgleich statt der Rotorblätter 6.1 im Rotorblattsegment 2.2 angebracht. An der Zusatz-Rotorlagerwelle 3.2 ist ein Führungsgleitstück 13 angebracht, welches die Zusatz-Rotorlagerwelle 3.2 mit der Rotorführungswelle 3.3 verknüpft. Diese ist über ein Rotordeckellager 11.1 starr mit dem Rotordeckel 11 verbunden. Der Rotordeckel 11 selbst schließt das Rotordeckelsegment 2.5 mit den oberen Zusatz-Rotorringen 8.4 des Antriebsteiles und dem Rotordeckellager 11.1 ab.

Die Antriebskraft wird durch die Rotorglocke 2 übertragen. Damit ist sichergestellt, dass die Rotorantriebsachse A unabhängig von den Auslenkbewegungen der Rotorlagerachse B ist, wobei Letztere mit einer Komponente senkrecht zur Längsachse L des Hubschrauberkörpers 1 verstellbar ist und nicht auf die in Fig. 2 gezeigte Richtung beschränkt ist, sondern insbesondere zu beiden Seiten der Längsachse L verstellt werden kann. Das Lagersegment 2.1 der Rotorglocke 2 trägt den Hubschrauberkörper 1 im Flug und überträgt die Antriebskräfte vom Hauptantrieb des Hubschrauberkörpers 1 in den Rotorkopf 2. Die in den Rotorringen 8.1 und 8.2 des Rotorblattsegments 2.2 enthaltenen Schwinglager 7 leiten die Antriebskräfte aus der Rotorglocke 2 über die Rotorringe 8.1, 8.2 zu den Rotorblattwellen 6. Deren verbundene Schwinglager 7 ermöglichen die von der Rotorlagerwelle 3.1 geführten Längenverschiebungen der Rotorblattwellen 6 und damit der Rotorblätter 6.1. Die Schwinglager 7 nehmen außerdem die Beschleunigungs- und Bremskräfte in Form von Zentrifugal- und Zentripetalkräften an den Rotorblattwellen 6 und den Rotorblättern 6.1 auf und leiten sie weiter an die Rotorringe 8.1 und 8.2. Über die Verbindung des oberen Rotorrings 8.2 des Rotorblattsegmentes 2.2 über die Zwischenplatte 12 mit dem unteren Zusatz-Rotorring 8.3 des Zusatz-Rotorblattsegmentes 2.4 sind die Drehbewegungen zweier übereinanderliegender Rotorblattwellen 6 synchronisiert.

Der Sinussteller 1.1 bewirkt die Verschiebung der Rotorlagerwelle 3.1 durch Verfahren eines Lagerschlittens auf Gleitschienen, an welchen die Rotorlagerwelle 3.1 angebracht ist und somit der Bewegung folgt. Dadurch werden die Abstände der Rotorblätter 6.1 von der Rotorantriebsachse A durch Verschiebung der Rotorblattwellen 6 längs ihrer Ausrichtung geändert. Ebenfalls ist der Sinusteller 1.1 mit der Taumelscheibe 1.2 über Servomotoren oder eine Servohydraulik zum Einstellen des Anstellwinkels der Rotorblattwellen 6 über die Drehlagerböcke 5 verbunden.

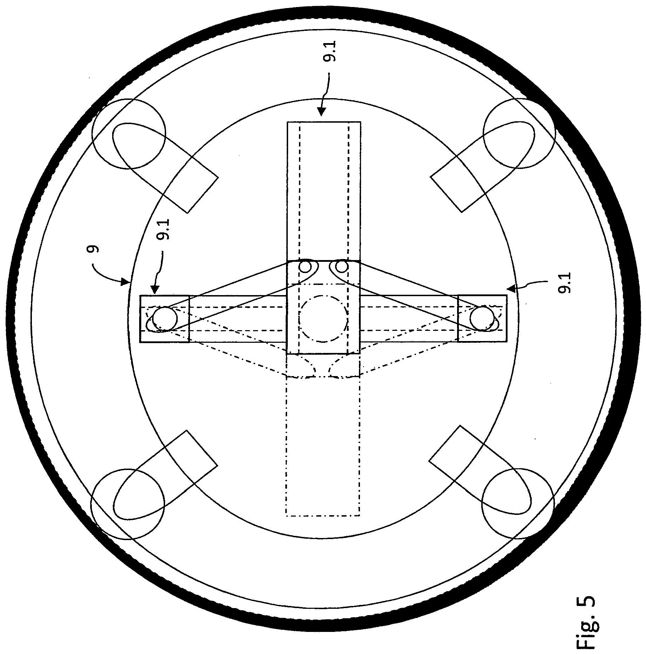

Im mittleren Scherensegment 2.3 (siehe Fig. 4 und 5) dient der Aufbau der Zwischenplatte 9 zur Übertragung der Bewegung der Rotorlagerwelle 3.1 mit den damit befestigten Rotorblättern im Rotorblattsegment 2.2 auf die Zusatz-Rotorlagerwelle 3.2 und die Zusatz-Rotorblattwellen 10 im Zusatz-Rotorblattsegment 2.4. Die Gegengewichte 10.1 an den Enden der dortigen Zusatz-Rotorblattwellen 10 gleichen dabei die entstehende Unwucht durch das verschobene, gegenüberliegende Rotorblatt 6.1 im Rotorblattsegment 2.2 aus. Mangels Rotorblättern im Zusatz-Rotorblattsegment 2.4 entfällt die Einstellung des Neigungswinkels und somit auch die Drehlagerblöcke. Ein Rotordeckellager 11.1 stellt eine starre Verbindung zur Rotorführungswelle 3.3 dar.

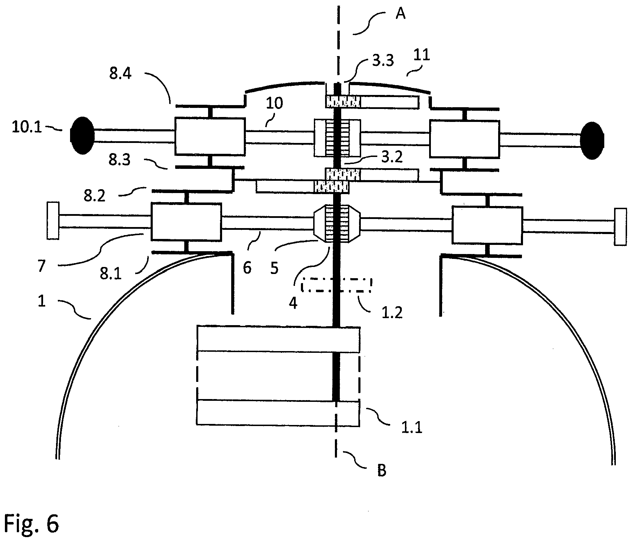

Die Fig. 6 zeigt eine weitere bevorzugte Ausgestaltung der Erfindung mit einer Verkürzung der Zusatz-Rotorblattwellen 10 im Zusatz-Rotorblattsegment 2.4 gegenüber den Rotorblattwellen 6 des Rotorblattsegmentes 2.2. Dadurch ändern sich die Parameter der Gegengewichte 10.1 entsprechend. Dies schließt insbesondere deren Masse ein. Die Änderung von insbesondere der Masse der Gegengewichte 10.1 ist unter anderem durch das maximal zulässige Gewicht des Helikopters beschränkt. Hierbei können ein kompakterer Aufbau des Rotorkopfes 2 durch eine entsprechende Ausgestaltung des Zusatz Rotorblattsegmentes 2.4 im Vergleich zum unteren Rotorblattsegment 2.2 und dadurch verbesserte Flugeigenschaften erzielt werden.

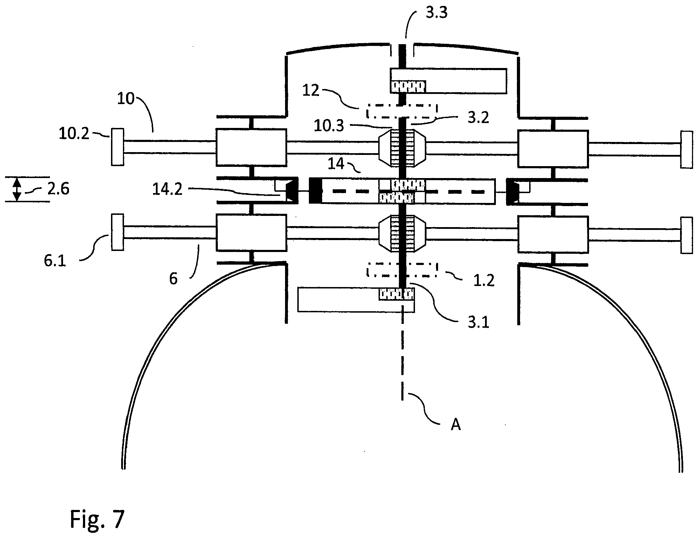

Die Fig. 7 zeigt eine erfindungsgemäße, bevorzugte Ausgestaltung als eine Weiterentwicklung des aus dem Stand der Technik bereits bekannten Aufbaus von Koaxialrotoren. Dabei ist das Zusatz-Rotorblattsegment 2.4 koaxial über dem Rotorblattsegment 2.2 angebracht und mit Zusatz-Rotorblättern 10.2 statt Gegengewichten 10.1 versehen. Die Zusatz-Rotorblätter 10.2 drehen sich gegenläufig zu den Rotorblättern 6.1. Die Drehmomente beider Rotorblattsegmente gleichen sich dadurch aus. Dieser Aufbau erfordert eine Zusatz-Taumelscheibe 12 zur Einstellung des Neigungswinkels der Zusatz-Rotorblätter 10.2 des Zusatz-Rotorblattsegmentes 2.4 über Zusatz-Rotordrehblöcke 10.3. Die bevorzugte Ausgestaltung der Fig. 7 sieht vor, dass auch bei einem Koaxialrotorsystem die Rotorlagerachse B von der Rotorantriebsachse A getrennt ist.

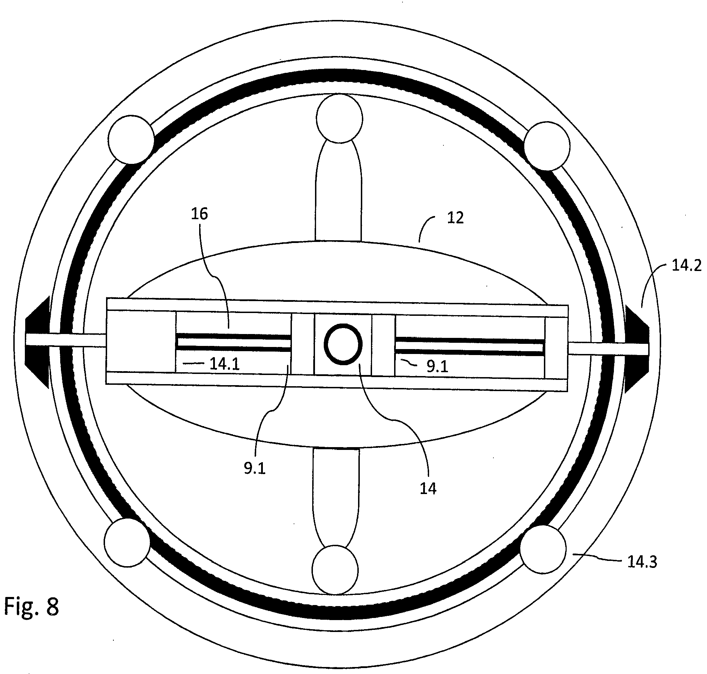

Ein koaxialer Sinussteller 14 ist in einem koaxialen Scherensegment 2.6 angebracht (Fig. 8). Er hat eine Gewindespindel 14.1, welche die Gleitstücke 9 des koaxialen Schersegments 26 elektrisch oder hydraulisch bewegt. Die an den Gleitstücken 9 befestigte Rotorlagerwelle 3.1 und die Zusatz-Rotorlagerwelle 3.2 werden dadurch gegenläufig zueinander bewegt. Die Rotorblattwellen 6 des Rotorblattsegments 2.2 und die Zusatz-Rotorblattwellen 10 des Zusatz-Rotorblattsegments 2.4 werden dadurch gegenläufig zueinander bewegt.

In dieser bevorzugten Ausgestaltung sind eine Taumelscheibe 1.2 und eine Zusatz-Taumelscheibe 12 vorhanden. Während die Taumelscheibe 1.2 gemäß den vorherigen Ausgestaltungen angebracht ist, ist die Zusatz-Taumelscheibe 12 um 180° gekippt im Zusatz-Rotorblattsegment 2.4 eingebaut. Ferner sind im Zusatz-Rotorblattsegment 2.4 Zusatz-Rotordrehböcke 10.3 vorhanden, die den Neigungswinkel der Zusatz-Rotorblätter 10.2 einstellen. Diese sind rechtsläufig ausgestattet und an die Zusatz-Rotorblattwellen 10 des Zusatz-Rotorblattsegmentes 2.4 angebracht. Das Rotorblattsegment 2.2 treibt das Zusatz-Rotorblattsegment 2.4 über Kegelräder 14.2 im koaxialen Scherensegment 2.6 in der gegenläufigen Drehrichtung an. Hierbei bewegt sich das Zusatz-Rotorblattsegment 2.4 durch eine Rollenlagerung auf einem Nutenring 14.3 in oder auf dem Rotorblattsegment 2.2 (Fig. 8).

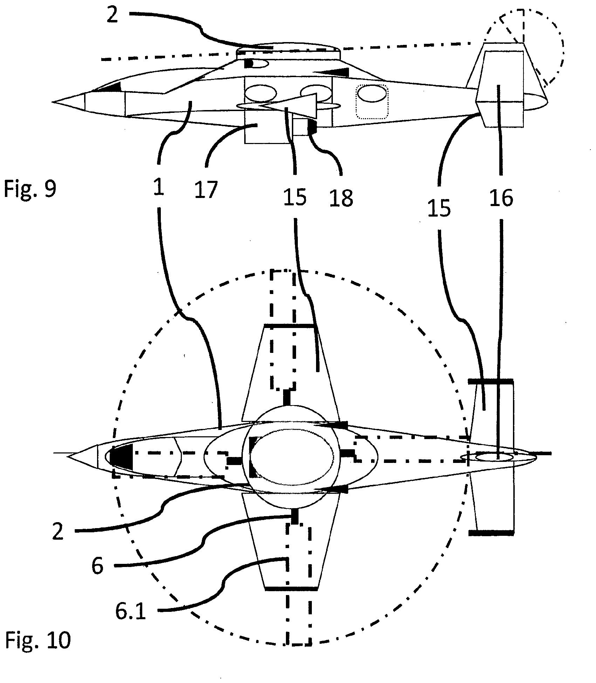

Fig. 9 und 10 zeigen eine weitere Ausgestaltung eines erfindungsgemäßen Hubschraubers, an dessen Hubschrauberkörper 1 zu beiden Seiten horizontal jeweils eine Tragfläche 15 angebracht ist. Die Tragflächen 15 sind auf mittlerer Höhe des Hubschrauberkörpers 1 angebracht und drehbar gelagert. Durch ihre Drehbarkeit um die horizontale Achse um mindestens 90° und ihre Strömungseigenschaften erzeugen die Tragflächen 15 einen zusätzlichen Auftrieb. Ein weiteres Paar Tragflächen 15 ist am Heck des Hubschrauberkörpers 1 angeordnet, wobei die horizontale Dimensionen der hinteren Tragflächen 15 kleiner sind als jene der vorderen Tragflächen 15. Insbesondere die vorderen Tragflächen 15 können als Höhenleitwerk ausgestaltet sein, so dass sie als sogenannte Canards vor den hinteren Tragflächen 15 angeordnet sind. Am Heck des Hubschrauberkörpers 1 ist ein Seitenleitwerk 16 in Form einer sich im Wesentlichen vertikal nach oben erstreckenden Heckflosse vorgesehen.

Auf mittlerer Höhe des Hubschrauberkörpers 1 ist unterhalb der Tragflächen 15 ein Generator 17 mit einem Primärantrieb 18 vorgesehen. Der Generator 17 kann beispielsweise Brennstoffzellen und/oder Akkumulatoren aufweisen und stellt Energie für den Primärantrieb 18 zur Verfügung, der selbst Turbinen aufweist und eine zusätzliche Antriebskraft für den Hubschrauber erzeugt. Bezüglich der restlichen Komponenten ist auf die vorstehenden Ausführungen verwiesen.

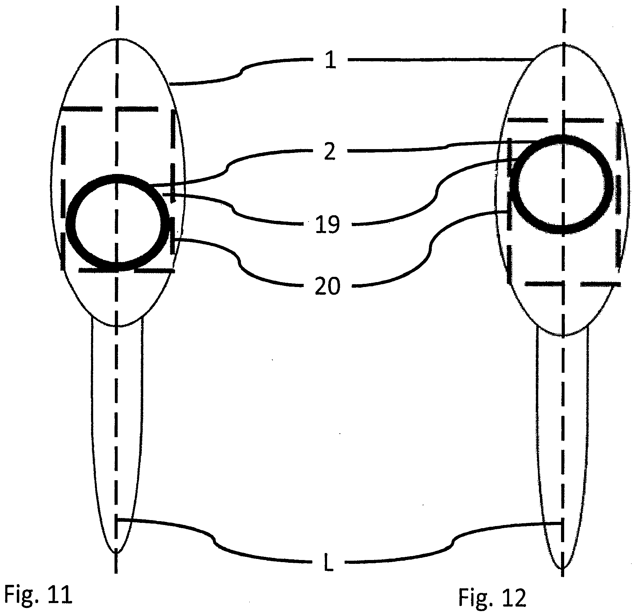

In der in den Fig. 11 und 12 gezeigten Ausführungsform eines erfindungsgemäßen Hubschraubers ist im Hubschrauberkörper 1 ein in einem Verstellschlitten 20 beweglicher Lagerring 19 vorgesehen, dessen Bewegungsrichtung entlang der Längsachse L des Hubschrauberkörpers 1 ausgestaltet ist. Der Rotorkopf 2 ist mit dem Lagerring 19 verbunden und damit ebenfalls in Richtung der Längsachse L des Hubschrauberkörpers 1 verstellbar, so dass bei hohen Translationsgeschwindigkeiten, wenn sich der Auftriebspunkt des Hubschraubers nach hinten in Richtung des Hecks und folglich der Lastschwerpunkt nach vorne in Richtung des Bugs verlagert, der Schwerpunkt des Auftriebs durch ein Verstellen des Rotorkopfes nach vorne über den Lagerring 19 wieder zum (Massen-)Schwerpunkt des Hubschraubers verlagert wird. Dadurch werden stabile Fluglagen auch bei sehr hohen Translationsgeschwindigkeiten möglich.

## Patentansprüche

1. Hubschrauber mit einem Hubschrauberkörper (1) mit einer Längsachse (L) und einem um eine Rotorantriebsachse (A) angetriebenen Rotorkopf (2), der mindestens zwei über jeweils eine Rotorblattwelle (6) gehaltene Rotorblätter (6.1) aufweist, wobei eine Rotorlagerachse (B) der Rotorblattwellen (6) senkrecht zu ihrer Erstreckungsrichtung gegenüber der Rotorantriebsachse (A) verstellbar ist, **dadurch gekennzeichnet, dass**
eine Rotorwelle (3) mehrere Teile aufweist,
die Teile der Rotorwelle (3) mindestens eine Rotorlagerwelle (3.1) und eine Zusatz-Rotorlagerwelle (3.2) beinhalten,
der Rotorkopf (2) in mindestens einem Rotorblattsegment (2.2) die mindestens zwei Rotorblattwellen (6) hält, mindestens ein Zusatz-Rotorblattsegment (2.4) mit Zusatz-Rotorblattwellen (10) vorhanden ist,
das Zusatz-Rotorblattsegment (2.4) mit dem Rotorblattsegment (2.2) gekoppelt ist und
die beweglichen Teile der Rotorwelle (3), Rotorlagerwelle (3.1) und Zusatz-Rotorlagerwelle (3.2), gegenläufig auslenkbar sind und dadurch die Rotorblattwellen (6) und die Zusatz-Rotorblattwellen (10) gegenläufig zueinander beweglich sind.

2. Hubschrauber nach Anspruch 1, **dadurch gekennzeichnet, dass** die Rotorlagerachse (B) mit einer Komponente senkrecht zu der Längsachse (L) des Hubschrauberkörpers (1) verstellbar ist.

3. Hubschrauber nach Anspruch 1 oder 2, **dadurch gekennzeichnet, dass** die Rotorlagerachse (B) nach beiden Seiten der Längsachse (L) des Hubschrauberkörpers (1) verstellbar ist.

4. Hubschrauber nach einem der Ansprüche 1 bis 3, **dadurch gekennzeichnet, dass** die Rotorantriebsachse (A) und die Rotorlagerachse (B) voneinander getrennt ausgebildet sind.

5. Hubschrauber nach einem der vorangehenden Ansprüche, **dadurch gekennzeichnet, dass** die mehreren Teile der Rotorwelle (3) in ihrer axialen Richtung aufeinanderfolgen und/oder die Rotorwelle (3), deren Symmetrieachse die Rotorlagerachse (B) ist, durch einen Sinussteller (1.1), senkrecht zur Rotorlagerachse (B), verstellbar ist, sowie vorzugsweise weiterhin mindestens eine Rotorblattwelle (6) mittelbar oder unmittelbar mit dem Sinussteller (1.1) verbunden ist und von diesem verstellbar ist und/oder eine ein- oder zweidimensionale Verstellbarkeit der Rotorwelle (3) durch den Sinussteller (1.1) gegenüber ist.

6. Hubschrauber nach Anspruch 5, **dadurch gekennzeichnet, dass** mindestens zwei Rotorblattwellen (6) mit der Rotorwelle (3) verbunden sind und mit dieser verstellbar sind.

7. Hubschrauber nach einem der vorangehenden Ansprüche, **dadurch gekennzeichnet, dass** mindestens zwei Rotorblattwellen (6) jeweils mittels Schwinglagern (7) geführt sind.

8. Hubschrauber nach einem der vorhergehenden Ansprüche, **dadurch gekennzeichnet, dass** die Rotorantriebsachse (A) mit der Symmetrieachse des Rotorkopfes (2) zusammenfällt.

9. Hubschrauber nach einem Anspruch 7 oder 8, **gekennzeichnet durch** die Übertragung der Antriebskräfte über Schwinglager (7) und Rotorringe (8.1, 8.2) auf die Rotorblattwellen (6), wobei insbesondere die Rotorringe (8.1, 8.2) drehbar mit den Schwinglagern (7) verbunden sind.

10. Hubschrauber nach einem der Ansprüche 5 bis 9, **dadurch gekennzeichnet, dass** an mindestens einem der Zusatz-Rotorblattsegmente (2.4) Gegengewichte (10.1) an den Zusatz-Rotorblattwellen (10) angebracht sind, wobei insbesondere die Gegengewichte (10.1) festes, flüssiges oder gasförmiges Material aufweisen und/oder die Masse der Gegengewichte (10.1) zeitlich konstant oder veränderbar ist.

11. Hubschrauber nach einem der Ansprüche 5 bis 10, **dadurch gekennzeichnet, dass** die Kopplung des Rotorblattsegments (2.2) mit dem Zusatz-Rotorblattsegment (2.4) über ein Scherensegment (2.3) bewerkstelligt ist, wobei insbesondere das Scherensegment (2.3) Gleitstücke (9) aufweist.

12. Hubschrauber nach einem der Ansprüche 5 bis 11, **dadurch gekennzeichnet, dass** mindestens eine der Zusatz-Rotorblattwellen (10) des Zusatz-Rotorblattsegments (2.4) die gleiche Bauform wie eine der Rotorblattwellen (6) des Rotorblattsegments (2.2) aufweist, wobei vorzugsweise übereinstimmende Längen von mindestens einer Zusatz-Rotorblattwelle (10) zu mindestens einer der Rotorblattwellen (6), gegeben sind und wobei weiterhin insbesondere mindestens ein Zusatz-Rotorblattsegment (2.4) mindestens eine Zusatz-Rotorblattwelle (10) mit einer veränderten Länge gegenüber mindestens einer Rotorblattwelle (6) aufweist.

13. Hubschrauber nach einem der Ansprüche 5 bis 12, **dadurch gekennzeichnet, dass** die Drehrichtung des Rotorblattsegmentes (2.2) mit jener von mindestens einem Zusatz-Rotorblattsegment (2.4) gekoppelt ist, wobei insbesondere eine Kopplung des Rotorblattsegmentes (2.2) mit einem der Zusatz-Rotorblattsegmente (2.4) über Kegelräder (14.2) in einem Nutenring (14.3) vorgesehen ist, welcher in einem koaxialen Scherensegment (2.6) angebracht ist.

14. Hubschrauber nach einem der vorangehenden Ansprüche, **dadurch gekennzeichnet, dass** im Hubschrauberkörper (1) ein Generator (17) als Primärantrieb (18) vorgesehen ist, wobei insbesondere der Primärantrieb (18) Turbinen, Kolbenmotoren, Brennstoffzellen und/oder Akkumulatoren aufweist.

15. Hubschrauber nach einem der vorangehenden Ansprüche, **dadurch gekennzeichnet, dass** ein Lagerring (19) in einem Verstellschlitten (20) im Hubschrauberkörper (1) beweglich gelagert ist, wobei der Lagerring (19) mit dem Rotorkopf (2) verbunden und der Lagerring (19) mit dem Rotorkopf (2) in Richtung der Längsachse (L) des Hubschrauberkörpers (1) verschiebbar ist.

## Claims

1. Helicopter having a helicopter body (1) with a longitudinal axis (L) and a rotor head (2) which is driven about a rotor drive axis (A) and which has at least two rotor blades (6.1) held via one rotor blade shaft (6) each a rotor bearing axis (B) of the rotor blade shafts (6) is adjustable perpendicular to its direction of extent in relation to the rotor drive axis (A), wherein a rotor shaft (3) has a plurality of parts, the parts of the rotor shaft (3) contain at least one rotor bearing shaft (3.1) and an additional rotor bearing shaft (3.2),
the rotor head (2) holds the at least two rotor blade shafts (6) in at least one rotor blade segment (2.2), there is at least one additional rotor blade segment (2.4) with additional rotor blade shafts (10),
the additional rotor blade segment (2.4) is coupled to the rotor blade segment (2.2), and
the movable parts of the rotor shaft (3), the rotor bearing shaft (3.1) and additional rotor bearing shaft (3.2) are deflectable in an opposed manner and, as a result, the rotor blade shafts (6) and the additional rotor blade shafts (10) are movable in an opposed manner with respect to one another.

2. Helicopter according to Claim 1, **characterized in that** the rotor bearing axis (B) is adjustable with a component perpendicular to the longitudinal axis (L) of the helicopter body (1).

3. Helicopter according to Claim 1 or 2, **characterized in that** the rotor bearing axis (B) is adjustable to both sides of the longitudinal axis (L) of the helicopter body (1).

4. Helicopter according to one of Claims 1 to 3, **characterized in that** the rotor drive axis (A) and the rotor bearing axis (B) are formed separately from each other.

5. Helicopter according to one of the preceding claims, **characterized in that** the plurality of parts of the rotor shaft (3) follow one another in their axial direction and/or the rotor shaft (3), the axis of symmetry of which is the rotor bearing axis (B), is adjustable by a sinusoidal adjuster (1.1) perpendicular to the rotor bearing axis (B) and preferably in addition that at least one rotor blade shaft (6) is connected indirectly or directly to the sinusoidal adjuster (1.1) and is adjustable by the latter and/or a single-or two-dimensional adjustability of the rotor shaft (3) by the sinusoidal adjuster (1.1).

6. Helicopter according to one of Claims 5,
**characterized in that** at least two rotor blade shafts (6) are connected to the rotor shaft (3) and are adjustable with the latter.

7. Helicopter according to one of the preceding claims,
**characterized in that** at least two rotor blade shafts (6) are each guided by means of oscillating bearings (7).

8. Helicopter according to one of the preceding claims, **characterized in that** the rotor drive axis (A) coincides with the axis of symmetry of the rotor head (2).

9. Helicopter according to one of Claims 7 or 8,
**characterized by** the transmission of the drive forces via oscillating bearings (7) and rotor rings (8.1, 8.2) to the rotor blade shafts (6), wherein especially the rotor rings (8.1, 8.2) are connected rotatably to the oscillating bearings (7).

10. Helicopter according to one of Claims 5 to 9,
**characterized in that**, on at least one of the additional rotor blade segments (2.4), counterweights (10.1) are attached to the additional rotor blade shafts (10),
wherein especially the counterweights (10.1) comprise solid, liquid or gaseous material and/or the mass of the counterweights (10.1) is temporally constant or variable.

11. Helicopter according to one of Claims 5 to 10,
**characterized in that** the coupling of the rotor blade segment (2.2) to the additional rotor blade segment (2.4) is brought about via a scissor-type segment (2.3), wherein especially the scissor-type segment (2.3) has sliding pieces (9) .

12. Helicopter according to one of Claims 5 to 11,
**characterized in that** at least one of the additional rotor blade shafts (10) of the additional rotor blade segment (2.4) has the same constructional form as one of the rotor blade shafts (6) of the rotor blade segment (2.2), wherein preferably corresponding lengths of at least one additional rotor blade shaft (10) with respect to at least one of the rotor blade shafts (6) are provided and wherein in addition especially at least one additional rotor blade segment (2.4) has at least one additional rotor blade shaft (10) with a changed length in relation to at least one rotor blade shaft (6) .

13. Helicopter according to one of Claims 5 to 12,
**characterized in that** the direction of rotation of the rotor blade segment (2.2) is coupled to that of at least one additional rotor blade segment (2.4), wherein especially a coupling is provided of the rotor blade segment (2.2) to one of the additional rotor blade segments (2.4) via bevel gears (14.2) in a groove ring (14.3) which is placed in a coaxial scissor-type segment (2.6).

14. Helicopter according to one of the preceding claims, **characterized in that** a generator (17) is provided as the primary drive (18) in the helicopter body (1), wherein especially the primary drive (18) has turbines, piston engines, fuel cells and/or accumulators.

15. Helicopter according to one of the preceding claims,
**characterized in that** a bearing ring (19) is mounted movably in an adjustable slide (20) in the helicopter body (1), wherein the bearing ring (19) is connected to the rotor head (2) and the bearing ring (19) is displaceable with the rotor head (2) in the direction of the longitudinal axis (L) of the helicopter body (1).

## Revendications

1. Hélicoptère avec un corps d'hélicoptère (1) doté d'un axe longitudinal (L) et d'une tête de rotor (2) entraînée autour d'un axe d'entraînement de rotor (A), ladite tête comportant au moins deux pales de rotor (6.1) maintenues via respectivement un arbre de pale de rotor (6), un axe de palier de rotor (B) des arbres de pale de rotor (6) pouvant être réglé perpendiculairement à sa direction d'extension par rapport à l'axe d'entraînement de rotor (A), **caractérisé en ce que** :
un arbre de rotor (3) comporte plusieurs parties ;
les parties de l'arbre de rotor (3) contiennent au moins un arbre de palier de rotor (3.1) et un arbre de palier de rotor supplémentaire (3.2) ;
la tête de rotor (2) maintient les au moins deux arbres de pale de rotor (6) dans au moins un segment de pale de rotor (2.2) ;
au moins un segment de pale de rotor supplémentaire (2.4) avec des arbres de pale de rotor supplémentaires (10) est présent ;
le segment de pale de rotor supplémentaire (2.4) est couplé au segment de pale de rotor (2.2) ; et
les parties mobiles de l'arbre de rotor (3), de l'arbre de palier de rotor (3.1) et de l'arbre de palier de rotor supplémentaire (3.2) peuvent être déviées de façon opposée, rendant ainsi mobiles les uns par rapport aux autres les arbres de pale de rotor (6) et les arbres de pale de rotor supplémentaires (10) de façon opposée les uns par rapport aux autres.

2. Hélicoptère selon la revendication 1, **caractérisé en ce que** l'axe de palier de rotor (B) peut être réglé, à l'aide d'une composante, perpendiculairement à l'axe longitudinal (L) du corps d'hélicoptère (1).

3. Hélicoptère selon la revendication 1 ou 2, **caractérisé en ce que** l'axe de palier de rotor (B) peut être réglé des deux côtés de l'axe longitudinal (L) du corps d'hélicoptère (1).

4. Hélicoptère selon l'une quelconque des revendications 1 à 3, **caractérisé en ce que** l'axe d'entraînement de rotor (A) et l'axe de palier de rotor (B) sont réalisés de façon séparée l'un de l'autre.

5. Hélicoptère selon l'une quelconque des revendications précédentes, **caractérisé en ce que** les plusieurs parties de l'arbre de rotor (3) se suivent dans leur direction axiale et/ou que l'arbre de rotor (3) dont l'axe de symétrie est l'axe de palier de rotor (B) peut être réglé par un organe de réglage de sinus (1.1), perpendiculairement à l'axe de palier de rotor (B), ainsi que de préférence en outre au moins un arbre de pale de rotor (6) étant relié de façon directe ou indirecte à l'organe de réglage de sinus (1.1) et pouvant être réglé par lui et/ou le réglage uni ou bidimensionnel pouvant s'effectuer via l'organe de réglage de sinus (1.1) pour ce qui concerne l'arbre de rotor (3).

6. Hélicoptère selon la revendication 5, **caractérisé en ce qu'**au moins deux arbres de pale de rotor (6) sont reliés à l'arbre de rotor (3) et sont réglables avec lui.

7. Hélicoptère selon l'une quelconque des revendications précédentes, **caractérisé en ce qu'**au moins deux arbres de pale de rotor (6) sont respectivement guidés à l'aide de paliers vibrants (7).

8. Hélicoptère selon l'une quelconque des revendications précédentes, **caractérisé en ce que** l'axe d'entraînement de rotor (A) coïncide avec l'axe de symétrie de la tête de rotor (2).

9. Hélicoptère selon l'une quelconque des revendications 7 ou 8, **caractérisé par** la transmission des forces de l'entraînement via les paliers vibrants (7) et les bagues de rotor (8.1, 8.2) placés sur les arbres de pale de rotor (6), les bagues de rotor (8.1, 8.2) étant notamment reliées de façon à pouvoir tourner avec les paliers vibrants (7).

10. Hélicoptère selon l'une quelconque des revendications 5 à 9, **caractérisé en ce que** des contre-poids (10.1) sont disposés au niveau des arbres de pale de rotor supplémentaires (10), au niveau d'au moins un des segments de pale de rotor supplémentaire (2.4), les contre-poids (10.1) comportant une matière fluide ou gazeuse et/ou la masse des contre-poids (10.1) pouvant être constante ou varier dans le temps.

11. Hélicoptère selon l'une quelconque des revendications 5 à 10, **caractérisé en ce que** le couplage du segment de pale de rotor (2.2) au segment de pale de rotor supplémentaire (2.4) est réalisé via un segment ciseau (2.3), le segment ciseau (2.3) comportant notamment des parties coulissantes (9).

12. Hélicoptère selon l'une quelconque des revendications 5 à 11, **caractérisé en ce qu'**au moins un des arbres de pale de rotor supplémentaires (10) du segment de pale de rotor supplémentaire (2.4) présente la même forme de construction qu'un des arbres de pale de rotor (6) du segment de pale de rotor (2.2), des longueurs coïncidant, allant d'au moins un arbre de pale de rotor supplémentaire (10) jusqu'à au moins un arbres de pale de rotor (6), étant de préférence données et un segment de pale de rotor supplémentaire (2.4) comportant notamment au moins au moins un arbre de pale de rotor supplémentaire (10) avec une longueur modifiée par rapport à au moins un arbre de pale de rotor (6).

13. Hélicoptère selon l'une quelconque des revendications 5 à 12, **caractérisé en ce que** la direction de rotation du segment de pale de rotor (2.2) est couplée à celle de l'au moins un segment de pale de rotor supplémentaire (2.4), un couplage du segment de pale de rotor (2.2) avec un des segments de pale de rotor supplémentaires (2.4) étant notamment prévu dans une bague rainurée (14.3) via les roues coniques (14.2), ladite bague étant placée dans un segment ciseau (2.6) coaxial.

14. Hélicoptère selon l'une quelconque des revendications précédentes, **caractérisé en ce qu'**un générateur (17) servant d'entraînement principal (18) est prévu dans le corps d'hélicoptère (1), l'entraînement principal (18) comportant notamment des turbines, des moteurs à piston, des piles à combustible et/ou des accumulateurs.

15. Hélicoptère selon l'une quelconque des revendications précédentes, **caractérisé en ce qu'**une bague de palier (19) est disposée de façon mobile dans un coulisseau réglable (20) dans le corps d'hélicoptère (1), la bague de palier (19) étant reliée à la tête de rotor (2) et la bague de palier (19) pouvant être coulissée avec la tête de rotor (2) en direction de l'axe longitudinal (L) du corps d'hélicoptère (1).
